# EUROPÄISCHE PATENTSCHRIFT

(11) **EP 2 683 882 B1**
(45) Veröffentlichungstag und Bekanntmachung des Hinweises auf die Patenterteilung: **20.09.2017**
(21) Anmeldenummer: 11794036.1
(22) Anmeldetag: 02.12.2011
(51) Int. Cl.: E03C 1/08, G05D 7/01

(54) **DURCHFLUSSMENGENREGLER-EINHEIT**
THROUGHFLOW RATE REGULATOR UNIT
UNITÉ RÉGULATRICE DE DÉBIT

(30) Priorität: 11.03.2011 DE 202011003876 U
(43) Veröffentlichungstag der Anmeldung: 15.01.2014
(73) Patentinhaber: Neoperl GmbH, 79379 Müllheim (DE)
(72) Erfinder: TWITCHETT, Simon, Hartlebury Kidderminster DY11 7XF (GB)
(74) Vertreter: Börjes-Pestalozza, Henrich
(86) Internationale Anmeldenummer: PCT/EP2011/006043
(87) Internationale Veröffentlichungsnummer: WO 2012/123006

(56) Entgegenhaltungen:
- DE-A1- 4 436 193
- DE-C1- 10 228 490
- DE-U1- 20 010 101
- FR-A- 1 175 236
- FR-A- 1 290 337
- GB-A- 2 341 660

## Beschreibung

Die Erfindung betrifft eine Durchflussmengenregler-Einheit mit einem, sich über den lichten Querschnitt eines Fluidleitungsabschnitts erstreckenden Trägerelement, dass voneinander beabstandende Einsetzöffnungen hat, von denen in zumindest zwei Einsetzöffnungen jeweils ein Durchflussmengenregler angeordnet ist, wobei jeder Durchflussmengenregler einen ringförmigen Drosselkörper aus elastischem Material aufweist.

Man hat bereits Durchflussmengenregler geschaffen, die als Bestandteil einer sanitären Einsetzpatrone in den Wasserauslauf einer Wasserauslaufarmatur einsetzbar sind, um das aus dem Wasserauslauf pro Zeiteinheit ausströmende Wasservolumen druckunabhängig auf einen festgelegten Maximalwert zu begrenzen. Die vorbekannten Durchflussmengenregler können beispielsweise scheibenförmig ausgestaltet sein und eine auf beiden Stirnseiten des Durchflussmengenreglers offene Ringnut tragen, in die ein Drosselkörper aus elastischem Material eingesetzt ist. Dieser Drosselkörper begrenzt zwischen sich und einer inneren und/oder äußeren profilierten Umfangswandung des Durchflussmengenreglers einen Steuerspalt, dessen lichter Querschnitt sich durch Einformen des Drosselkörpers in die an der Umfangswandung vorgesehene Regelprofilierung unter dem Druck des durchströmenden Fluids verändert.

Der mit Hilfe dieser vorbekannten Durchflussmengenregler angestrebte Maximalwert der Durchflussleistung lässt sich beispielsweise durch die Dimensionierung des Drosselkörpers oder die Ausgestaltung der Regelprofilierung festlegen. Da das für den Drosselkörper verwendete Material von Charge zu Charge gewissen Eigenschaftsschwankungen unterliegt, lässt sich häufig jedoch auch der angestrebte Maximalwert nur durch Inkaufnahme vergleichsweise großer Toleranzen festlegen. Soweit Durchflussmengenregler für völlig unterschiedliche Maximalwerte der Durchflussleistung benötigt werden, bedarf esverschieden ausgestalteter Regler-Ausführungen, die sich in ihren Bestandteilen unterscheiden. Dadurch wird die Bevorratung und Bereitstellung solcher Durchflussmengenregler noch zusätzlich erschwert.

Aus der DE 102 28 490 C1 ist bereits eine Durchflussmengenregler-Einheit vorbekannt, die ein Trägerelement hat, welches sich über den lichten Durchflussquerschnitt eines Fluidleitungsabschnitts erstreckt. Dieses Trägerelement weist zwei koaxiale Einsetzöffnungen auf, die mit Abstand voneinander um einen gemeinsamen gedachten Mittelpunkt herum angeordnet sind. In jeder dieser Einsetzöffnungen ist jeweils ein Durchflussmengenregler angeordnet, wobei jeder Durchflussmengenregler einen ringförmigen Drosselkörper aus elastischem Material aufweist, der einen Regelkern umgreift und zwischen sich und einer inneren und/oder äußeren profilierten Umfangswandung einen sich unter dem Druck des durchströmenden Fluids verändernden Steuerspalt begrenzt. Während mit dem äußeren, im Durchmesser vergleichsweise großen Durchflussmengenregler auch hohe Literleistungen pro Zeiteinheit eingeregelt werden können, ist mit dem demgegenüber kleineren inneren Durchflussmengenregler eine Feindosierung der durchströmenden Wassermenge möglich. Da der lichte Durchflussquerschnitt des Fluidleitungsabschnitts die Abmessungen der Durchflussmengenregler begrenzt und da der Durchmesser des äußeren Durchflussmengenreglers einerseits vom dem Durchmesser des inneren Durchflussmengenreglers und andererseits von dem lichten Durchflussquerschnitt des Fluidleitungsabschnitts begrenzt wird, sind die Variationsmöglichkeiten bei dieser vorbekannten Durchflussmengenregler-Einheit beschränkt.
Aus der GB 2 341 660 A ist bereits eine Durchflüssmengenregler-Einheit vorbekannt, die in einem Reglergehäuse zwei Durchflussmengenregler hat. Jeder dieser Durchflussmengenregler weist einen ringförmigen Drosselkörper aus elastischem Material auf, der einen Regelkern umgreift. Die Regelkerne der Durchflussmengenregler, die in axialer Richtung im Reglergehäuse verstellbar geführt sind, weisen in einem Umfangsabschnitt eine Profilierung auf, deren innerer Randbereich schraubenlinienförmig um den Regelkern umläuft. Durch eine axiale Verstellung der Regelkerne kann die Form oder Anzahl der Profilierungen verändert werden. Da der Drosselkörper des einen Durchflussmengenreglers im Vergleich zum Drosselkörper des anderen Durchflussmengenreglers aus einem weicheren Material hergestellt ist, unterscheiden sich die Durchflussmengenregler in ihren Regeleigenschaften.
Aus der FR 1 290 337 A kennt man bereits eine Durchflussmengenregler-Einheit der eingangs erwähnten Art mit einem Trägerelement, auf dem mehrere Reglereinsätze mit Durchflussmengenreglern in Öffnungen des Trägerelements eingesetzt sind. Um die vorbekannte Durchflussmengenregler-Einheit mit verschiedenen Durchflussleistungen bereitstellen zu können, ist auf dem Trägerelement eine entsprechende Kombination von Durchflussmengenreglern vorgesehen.
Es besteht die Aufgabe, eine Durchflussmengenregler-Einheit zu schaffen, mit der sich der angestrebte Maximalwert der Durchflussleistung vergleichsweise einfach und sicher festlegen lässt.

Die erfindungsgemäße Lösung dieser Aufgabe wird im unabhängigen Anspruch 1 definiert und besteht darin, dass zumindest eine Einsetzöffnung des Trägerelements mittels eines Verschlussstopfens in Gebrauchsstellung verschlossen ist, welcher Verschlussstopfen statt eines Reglereinsatzes in die zumindest eine Einsetzöffnung eingesetzt ist.
Die erfindungsgemäße Durchflussmengenregler-Einheit weist ein Trägerelement auf, das sich über den lichten Querschnitt eines Wasserauslasses oder dergleichen Fluidleitungsabschnitts erstreckt. In diesem Trägerelement sind voneinander beabstandete Einsetzöffnungen vorgesehen, von denen in zumindest zwei Einsetzöffnungen jeweils ein Durchflussmengenregler angeordnet ist. Die Einsetzöffnungen sind so voneinander beabstandet, dass die Durchflussmengenregler nicht beispielsweise koaxial ineinander angeordnet sind, sondern sich voneinander funktional getrennt ausgestalten lassen. Dies bedeutet auch, dass die Einsetzöffnungen Rand an Rand aneinander anliegen können.
Jeder der auf dem Trägerelement der erfindungsgemäßen Durchflussmengenregler-Einheit vorgesehenen Durchflussmengenregler weist einen ringförmigen Drosselkörper aus elastischem Material auf. Da auf dem Trägerelement der erfindungsgemäßen Durchflussmengenregler-Einheit mehrere Durchflussmengenregler mit jeweils einem Drosselkörper vorgesehen sind, und da sich die Eigenschaftsschwankungen der Drosselkörper zumindest teilweise ausgleichen können, zeichnet sich die erfindungsgemäße Durchflussmengenregler-Einheit dadurch aus, dass sich der mit ihr angestrebte Maximalwert der Durchflussleistung vergleichsweise einfach und sicher festlegen lässt.
Erfindungsgemäß ist vorgesehen, dass von den Einsetzöffnungen eine Teilmenge mit Hilfe eines in der Einsetzöffnung vorzugsweise lösbar gehaltenen und insbesondere verrastbaren Stopfens verschlossen ist. So ist bei der Durchflussmengenregler-Einheit zumindest eine Einsetzöffnung mittels eines Verschlussstopfens vorzugsweise flüssigkeitsdicht verschließbar. Dieser zumindest eine Verschlussstopfen kann statt eines Reglereinsatzes in die Einsetzöffnung eingesetzt werden. Demgegenüber ist in den verbleibenden und unverschlossenen Einsetzöffnungen der erfindungsgemäßen Durchflussmengenregler-Einheit jeweils ein Reglereinsatz mit Durchflussmengenregler vorgesehen. Die Möglichkeit, Einsetzöffnungen bei Bedarf mittels jeweils eines Verschlussstopfens verschließen zu können, eröffnet die Möglichkeit, das Trägerelement auch über ein größeres Leistungsspektrum hinweg verwenden und erforderlichenfalls auch nachträglich noch an andere Einbausituationen anpassen zu können, indem Durchflussmengenregler gegen Verschlussstopfen und umgekehrt ausgetauscht werden.
Die erfindungsgemäße Durchflussmengenregler-Einheit kann auch Bestandteil eines baukastenartigen oder modularen Regler-Systems sein, das die Bereitstellung der verschiedensten Durchflussmengenregler-Einheiten erlaubt. Dazu können auf dem Trägerelement auch eine Mehrzahl von Einsetzöffnungen vorgesehen sein, von denen zumindest zwei, aber nur eine Teilmenge von Einsetzöffnungen mit Durchflussmengenreglern bestückt sind. Von den mit Durchflussmengenreglern unbestückten Einsetzöffnungen kann zumindest eine Teilmenge offen und beispielsweise ohne den Drosselkörper oder mit Hilfe eines in der Einsetzöffnung vorzugsweise lösbar gehaltenen und insbesondere verrastbaren Stopfens verschlossen sein. Durch Festlegung der Anzahl von gegebenenfalls auch unterschiedlich ausgestalteten Durchflussmengenreglern in der Durchflussmengenregler-Einheit und durch Addition der Durchflussleistungen jedes einzelnen verwendeten Durchflussmengenreglers lässt sich die maximale Gesamt-Durchflussleistung und gegebenenfalls auch die Regelcharakteristik einer aus dem Baukasten zusammengestellten Durchflussmengenregler-Einheit festlegen.
Das Prinzip eines modularen Systems wird noch dadurch begünstigt, dass zumindest einer der auf dem Trägerelement vorgesehenen Durchflussmengenregler als ein den Drosselkörper und die zumindest eine profilierte Umfangswandung umfassender Reglereinsatz ausgestaltet ist, welcher Reglereinsatz in eine Einsetzöffnung eingesetzt ist. Durch Einsetzen der erforderlichen Anzahl von Durchflussmegenreglern in zumindest eine Teilmenge der auf dem Trägerelement vorgesehenen Einsetzöffnungen lässt sich die maximale Gesamt-Durchflussleistung der benötigten Durchflussmegenregler-Einheit verändern und festlegen. Die erfindungsgemäße Durchflussmengenregler-Einheit lässt sich besonders platzsparend ausführen, weil das Trägerelement plattenförmig ausgebildet und die Reglereinsätze jeweils scheibenförmig ausgebildet sind.

Um die Regelcharakteristik beispielsweise in bestimmten Druckbereichen oder die maximale Durchflussleistung der erfindungsgemäßen Durchflussmengenregler-Einheit festlegen zu können, kann es vorteilhaft sein, wenn zumindest zwei der im Trägerelement vorgesehenen Durchflussmengenregler sich in ihren Regeleigenschaften voneinander unterscheiden.

Eine Ausführungsform gemäß der Erfindung sieht vor, dass die Drosselkörper von zumindest zwei der im Trägerelement vorgesehenen Durchflussmengenregler sich in ihren Regeleigenschaften voneinander unterscheiden. Bei dieser Ausführungsform können die Drosselkörper von zumindest zwei Durchflussmengenreglern beispielsweise aus unterschiedlichen elastomeren Materialien hergestellt sein. Zusätzlich oder stattdessen ist es auch möglich, dass die einen Steuerspalt begrenzenden Umfangswandungen von zumindest zwei der im Trägerelement vorgesehenen Durchflussmengenregler voneinander verschiedene Regelprofilierungen mit unterschiedlichen Regeleigenschaften aufweisen.

Wie bereits oben ausgeführt wurde, kann die maximale Durchflussleistung der Durchflussmengenregler-Einheit durch Auswahl verschiedener Durchflussmengenregler und insbesondere durch Auswahl verschiedener Drosselkörper und/oder Regelprofilierungen von zumindest zwei der auf dem Trägerelement vorgesehenen Durchflussmengenregler in einem Variationsspektrum festlegbar sein.

Dabei ist es besonders vorteilhaft, wenn der Reglereinsatz lösbar oder auswechselbar in eine Einsetzöffnung eingesetzt ist.

Um den Drosselkörper sicher im Bereich der profilierten Umfangswandung halten und die Funktion des Durchflussmengenreglers einer Durchflussmengenregler-Einheit stets sicherstellen zu können, ist es zweckmäßig, wenn der Regelkern an seinem freien Regelkern-Endbereich zumindest einen Sicherungsvorsprung hat, der den Drosselkörper auf den Regelkern in axialer Richtung sichert.
Um die in das Trägerelement einsetzbaren Reglereinsätze dort sicher und fest halten zu können, ist es vorteilhaft, wenn zumindest ein Reglereinsatz in einer ihm zugeordneten Einsetzöffnung des Trägerelements vorzugsweise lösbar verrastbar ist.
Weiterbildungen gemäß der Erfindung ergeben sich aus der Beschreibung in Verbindung mit den Ansprüchen sowie der Zeichnung. Nachstehend wird die Erfindung anhand bevorzugter Ausführungsbeispiele noch näher beschrieben.
Es zeigt:
- Fig. 1 bis 3: ein Trägerelement einer nicht unter die Erfindung fallenden
Durchflussmengenregler-Einheit in einer perspektivischen Draufsicht (Figur 1), in einem seitlichen Querschnitt durch Schnittebene II-II (Figur 2) und in einer Draufsicht auf die Zuströmseite (Figur 3), wobei das Trägerelement eine Mehrzahl von Einsetzöffnungen hat, in denen jeweils ein hülsenförmiger zentraler Regelkern angeordnet ist, den eine Ringnut umgibt, welche Ringnut an ihrer dem Regelkern abgewandten Innenumfangswandung eine Regelprofilierung trägt,

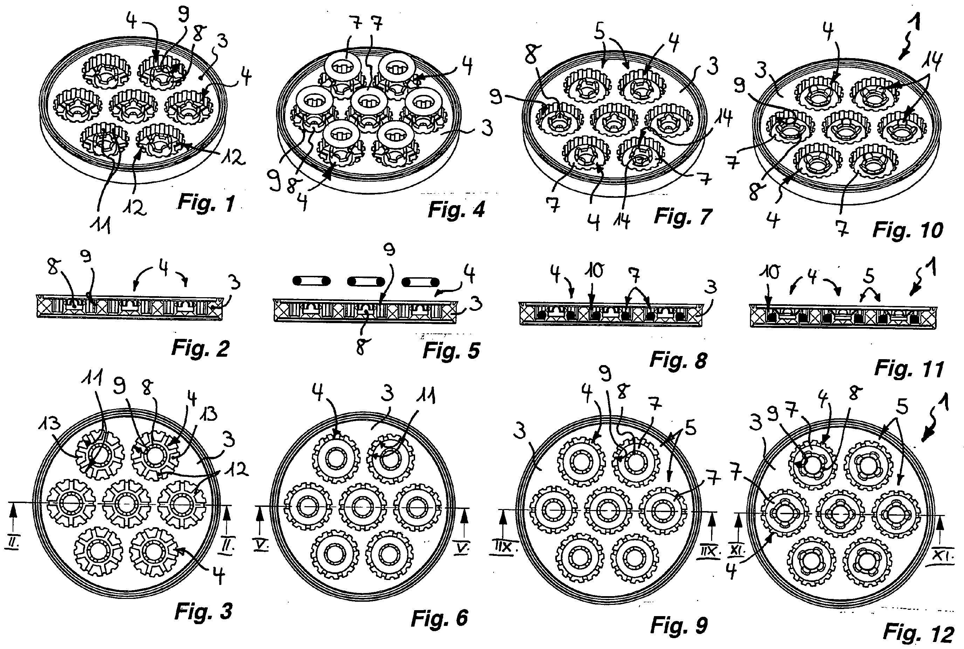

- Fig. 4 bis 6: das Trägerelement aus Figur 1 bis 3 in einer perspektivischen Draufsicht (Figur 4), in einem seitlichen Querschnitt in Schnittebene V-V (Figur 5) und in einer Draufsicht auf die Zuströmseite (Figur 6), wobei das Trägerelement unmittelbar vor dem Einsetzen von elastomeren Drosselkörpern in die Ringnuten der Einsetzöffnungen dargestellt ist,
- Fig. 7 bis 9: das Trägerelement aus den Figuren 1 bis 6 in einer perspektivischen Draufsicht (Figur 7), in einem seitlichen Querschnitt in Schnittebene VIII-VIII (Figur 8) und in einer Draufsicht auf die Zuströmseite (Figur 9), wobei in die Ringnuten der Einsetzöffnungen die elastomeren Drosselkörper eingesetzt sind,
- Fig. 10 bis 12: das Trägerelement aus Figur 1 bis 9 in einer perspektivischen Draufsicht (Figur 10), in einem seitlichen Querschnitt in Schnittebene XI-XI (Figur 11) und in einer Draufsicht auf die Zuströmseite (Figur 12), wobei an den Regelkernen der Einsetzöffnungen Vorsprünge vorstehen, die hier nun derart nach außen umgeformt sind, dass die Drosselkörper in axialer Richtung auf den Regelkernen gesichert und in der ihnen zugeordneten Ringnut der Einsetzöffnungen gehalten sind,

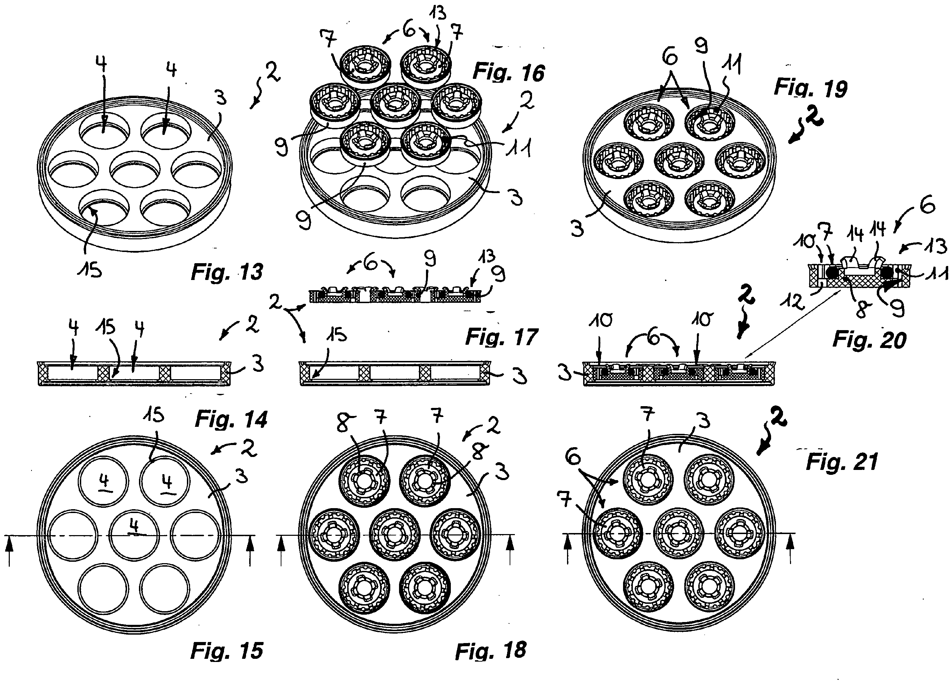

- Fig. 13 bis 15: das Trägerelement einer nicht unter die Erfindung fallenden Durchflussmengenregler-Einheit in einer perspektivischen Draufsicht (Figur 13), einem seitlichen Querschnitt (Figur 14) und in einer Draufsicht auf die Zuströmseite (Figur 15), wobei das Trägerelement eine Mehrzahl von Einsetzöffnungen hat, in die hier als Reglereinsätze ausgebildete Durchflussmengenregler eingesetzt werden können,
- Fig. 16 bis 18: das Trägerelement aus den Figuren 13 bis 15 in einer perspektivischen Draufsicht (Figur 16), einem seitlichen Querschnitt (Figur 17) und in einer Draufsicht auf die Zuströmseite (Figur 18), wobei das Trägerelement hier unmittelbar vor dem Einsetzen der als Reglereinsätze ausgebildeten Durchflussmengenregler dargestellt ist,
- Fig. 19 bis 21: das in den Figuren 13 bis 18 dargestellte Trägerelement der funktional fertiggestellten Durchflussmengenregler-Einheit in einer perspektivischen Draufsicht (Figur 19), einem seitlichen Querschnitt (Figur 20) und in einer Draufsicht auf die Zuströmseite (Figur 21), wobei die als Reglereinsätze ausgebildeten Durchflussmengenregler in die ihnen auf dem Trägerelement zugeordneten Einsetzöffnungen lösbar verrastet gehalten sind, und

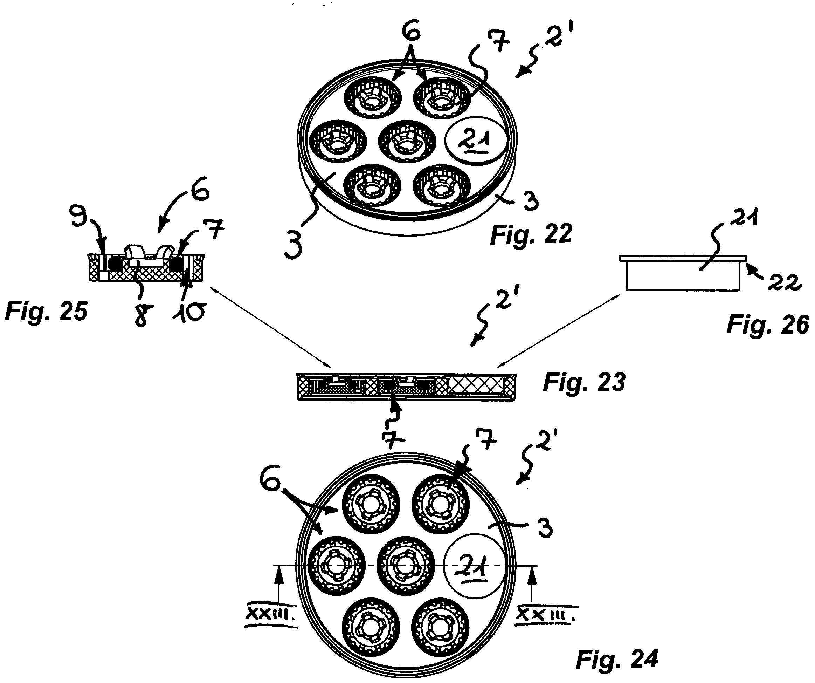

- Fig. 22 bis 26: das Trägerelement einer mit den Figuren 13 bis 21 vergleichbar ausgestalteten Durchflussmengenregler-Einheit, welche unter die Erfindung fällt, wobei das Trägerelement in zumindest zwei seiner Einsetzöffnungen jeweils einen hier als Reglereinsatz ausgebildeten Durchflussmengenregler und in wenigstens einer Einsetzöffnung einen vorzugsweise flüssigkeitsdicht verschließenden Verschlussstopfen hat, wobei das Trägerelement in einer perspektivischen Draufsicht (Fig. 22), einem seitlichen Querschnitt (Fig. 23; in Schnittebene XXIII/XXIII gemäß Fig. 24) und in einer Draufsicht auf die Zuströmseite (Fig. 24) dargestellt ist und wobei einer der in das Trägerelement lösbar einsetzbaren und als Reglereinsatz ausgebildeten Durchflussmengenregler in einem seitlichen Querschnitt (Fig. 25) und ein ebenfalls in eine der Einsetzöffnungen des Trägerelements einsetzbarer Verschlussstopfen in einer Seitenansicht (Fig. 26) gezeigt ist.

In den Figuren 1 bis 21 sind die einzelnen Montageschritte zur Herstellung einer in drei Ausführungen 1, 2 und 2' dargestellten Durchflussmengenregler-Einheit gezeigt. Diese Durchflussmengenregler-Einheiten 1, 2, 2', die beispielsweise in das Patronengehäuse einer im Wasserauslauf einer sanitären Auslaufarmatur montierbaren, hier nicht weiter gezeigten Einsetzpatrone eingebaut sein können, weisen jeweils ein Trägerelement 3 auf, das sich über den lichten Querschnitt eines Fluidleitungsabschnitts erstreckt. Das Trägerelement 3 hat zumindest zwei Einsetzöffnungen 4, die derart voneinander beabstandet sind, dass die Einsetzöffnungen 4 zwar auch Rand an Rand aneinander anliegen, aber funktional getrennt voneinander ausgestaltet werden können. In zumindest zwei der Einsetzöffnungen 4 ist jeweils ein Durchflussmengenregler 5 oder 6 vorgesehen, wobei jeder Durchflussmengenregler einen ringförmigen Drosselkörper 7 aus elastischem Material aufweist, der einen Regelkern 8 umgreift und zwischen sich und einer profilierten Umfangswandung 9 einen, sich unter dem Druck des durchströmenden Fluids verändernden Steuerspalt 10 begrenzt.

Die mit einer Regelprofilierung 11 versehene profilierte Umfangswandung 9 ist hier durch die dem Regelkern 8 gegenüberliegende Innenumfangswandung gebildet. Zusätzlich oder stattdessen ist es aber auch möglich, die Regelprofilierung 11 an der Außenumfangswandung des Regelkerns 8 vorzusehen.

Da auf dem Trägerelement 3 der Durchflussmengenregler-Einheiten 1, 2, 2' mehrere Durchflussmengenregler 5, 6 mit jeweils einem Drosselkörper 7 vorgesehen sind und da sich die Eigenschaftsschwankungen der Drosselkörper 7 zumindest teilweise ausgleichen können, zeichnen sich die hier dargestellten Durchflussmengenregler-Einheiten 1, 2, 2' dadurch aus, dass sich der mit ihr angestrebte Maximalwert der Durchflussleistung vergleichsweise einfach und sicher festlegen lässt. Die Durchflussmengenregler-Einheiten 1 der Figuren 1 - 12 fallen jedoch nicht unter die Erfindung, da sie weder Reglereinsätze aufweisen, noch wenigstens einen Verschlussstopfen in einer Einsetzöffnung des Trägerelements aufweisen. Die Durchflussmengenregler-Einheiten 2 der Figuren 13 - 21 zeigen zwar Reglereinsätze, nicht jedoch wenigstens einen Verschlussstopfen.

Die hier dargestellten Durchflussmengenregler-Einheiten 1, 2, 2' können auch Bestandteil eines baukastenartigen oder modularen Regler-Systems sein, dass die Bereitstellung der verschiedensten Durchflussmengenregler-Einheiten 1, 2, 2' erlaubt. Dazu können auf dem Trägerelement 3 auch eine Mehrzahl von Einsetzöffnungen 4 vorgesehen sein, von denen zumindest zwei, aber nur eine Teilmenge von Einsetzöffnungen 4 mit Durchflussmengenreglern 5, 6 bestückt sind. Durch Festlegung der Anzahl von gegebenenfalls auch unterschiedlich ausgestalteten Durchflussmengenreglern 5, 6 in der Durchflussmengenregler-Einheit 1, 2, 2' und durch Addition der Durchflussleistungen jedes einzelnen verwendeten Durchflussmengenreglers 5, 6 lässt sich die maximale Gesamt-Durchflussleistung und gegebenenfalls auch die Regelcharakteristik der aus dem Baukasten zusammengestellten Durchflussmengenregler-Einheit 1, 2, 2' festlegen.
Um die Regelcharakteristik beispielsweise in bestimmten Druckbereichen verändern oder die maximale Durchflussleistung der Durchflussmengenregler-Einheiten 1, 2, 2' festlegen zu können, kann es vorteilhaft sein, wenn zumindest zwei der im Trägerelement 3 vorgesehenen Durchflussmengenregler 5 oder 6 sich in ihren Regeleigenschaften voneinander unterscheiden. Dazu können die Drosselkörper 7 von zumindest zwei der im Trägerelement 3 vorgesehenen Durchflussmengenregler 5, 6 sich in ihren Regeleigenschaften voneinander unterscheiden. Zusätzlich oder stattdessen ist es möglich, dass die einen Steuerspalt 10 begrenzenden Umfangswandungen von zumindest zwei der im Trägerelement 3 vorgesehenen Durchflussmengenregler 5, 6 voneinander verschiedene Regelprofilierungen 11 mit unterschiedlichen Regeleigenschaften aufweisen.

In den Figuren 22 bis 24 ist erkennbar, dass von den mit Durchflussmengenreglern 5, 6 unbestückten Einsetzöffnungen 4 zumindest eine Teilmenge offen oder beispielsweise ohne den Drosselkörper 7 ausgestattet oder - wie hier - mit Hilfe eines in der Einsetzöffnung 4 vorzugsweise lösbar gehaltenen und insbesondere verrastbaren Stopfens verschlossen sein kann. So ist bei der Durchflussmengenregler-Einheit 2' gemäß den Figuren 22 bis 24 zumindest eine Einsetzöffnung 4 mittels eines Verschlussstopfens 16 vorzugsweise flüssigkeitsdicht verschließbar. Dieser zumindest eine Verschlussstopfen 16 kann statt eines Durchflussmengenreglers 6 oder wenigstens eines Durchflussmengenregler-Bestandteils und insbesondere statt eines Reglereinsatzes in die Einsetzöffnung 4 eingesetzt werden, bis ein am Verschlussstopfen 16 vorgesehener Ringflansch 17 an der Zuströmseite des Trägerelements 3 anliegt. Bei der Durchflussmengenregler-Einheit 2' gemäß den Figuren 22 bis 24 ist in den verbleibenden und unverschlossenen Einsetzöffnungen 4 jeweils ein Durchflussmengenregler 6 vorgesehen. Die Möglichkeit, Einsetzöffnungen 4 bei Bedarf mittels jeweils eines Verschlussstopfens 16 verschließen zu können, eröffnet die Möglichkeit, das Trägerelement 3 auch über ein größeres Leistungsspektrum hinweg verwenden und erforderlichenfalls auch nachträglich noch an andere Einbausituationen anpassen zu können, indem Durchflussmengenregler 6 gegen Verschlussstopfen 16 und umgekehrt ausgetauscht werden.

Aus einem Vergleich der Figuren 1 bis 12 wird deutlich, dass das vorzugsweise als Spritzgussteil und insbesondere als Kunststoff-Spritzgussteil hergestellte Trägerelement 3 der Durchflussmengenregler-Einheit 1 im Bereich seiner Einsetzöffnungen 4 auch die zentralen Regelkerne 8 trägt, die über Stege 12 mit der die Regelprofilierung 11 tragenden Umfangswandung 9 verbunden sind.

Zwischen den Regelkernen 8 und der Umfangswandung 9 ist eine Ringnut 13 gebildet, in welche der aus elastomerem Material hergestellte Drosselkörper 7 eingesetzt werden kann. Zwischen dem Drosselkörper 7 und der Regelprofilierung 11 bildet sich ein Steuerspalt 10, der sich unter dem Druck des durchströmenden Fluids verändert. Unter dem Druck des durchströmenden Fluids entsteht im Bereich des Steuerspalts 10 ein derartiger Unterdruck, dass der elastomere Drosselkörper 7 mit zunehmendem Druck immer weiter in die Regelprofilierungen 11 eingeformt und der Steuerspalt zunehmend verengt wird; dadurch wird erreicht, dass die Durchflussleistung in jedem einzelnen Durchflussmengenregler 5, 6 und damit auch die Gesamt-Durchflussleistung der Durchflussmengenregler-Einheiten 1, 2, 2' einen festgelegten Maximalwert nicht überschreitet.

Sind die Drosselkörper 7 in die Ringnuten 13 eingelegt worden, können die Drosselkörper 7 in der ihnen zugeordneten Ringnut 13 gesichert werden. Dazu sind an den hier hülsenförmig ausgestalteten Regelkernen 8 Vorsprünge 14 vorgesehen, die derart nach außen umgeformt werden, bis der einen Regelkern 8 umgreifende Drosselkörper 7 in axialer Richtung gesichert und in der Ringnut 13 sicher gehalten ist.

Das Trägerelement 3 der in den Figuren 13 bis 24 dargestellten Durchflussmengenregler-Einheiten 2, 2' weist Durchflussmengenregler 6 auf, die hier als ein den Drosselkörper 7 und die zumindest eine profilierte Umfangswandung 9 umfassender Reglereinsatz ausgestaltet sind. Diese Reglereinsätze können bis zu einem abströmseitig vorgesehenen und hier ringflanschartig ausgebildeten Einsetzanschlag 15 in die Einsetzöffnungen 4 eingesetzt werden. Die lösbar in die Einsetzöffnungen 4 einsetzbaren und als Reglereinsätze ausgebildeten Durchflussmengenregler 6 sind in den Einsetzöffnungen 4 lösbar verrastbar gehalten. Die als Reglereinsätze ausgebildeten Durchflussmengenregler 6 sind hier jeweils scheibenförmig ausgebildet. Auch die Durchflussmengenregler 6 weisen eine Ringnut 13 auf, in welche der Drosselkörper 7 eingesetzt werden kann. Diese Ringnut 13 umgreift den auch hier zentral angeordneten Regelkern 8, der an seinem zuströmseitigen freien Ende die Vorsprünge 14 trägt.

## Patentansprüche

1. Durchflussmengenregler-Einheit (1; 2; 2') mit einem, sich über den lichten Querschnitt eines Fluidleitungsabschnitts erstreckenden Trägerelement (3), das voneinander beabstandete Einsetzöffnungen (4) hat, in denen in zumindest zwei Einsetzöffnungen (4) jeweils ein scheibenförmig ausgebildeter Reglereinsatz mit einem Durchflussmengenregler (5; 6) eingesetzt ist, wobei jeder Durchflussmengenregler (5; 6) einen ringförmigen Drosselkörper (7) aus elastischem Material aufweist, **dadurch gekennzeichnet, dass** der Drosselkörper (7) der Durchflussmengenregler (5; 6) jeweils einen am Reglereinsatz angeordneten Regelkern (8) umgreift, in einer im Reglereinsatz zentral um den Regelkern (8) vorgesehenen, in Durchströmrichtung beidseits offenen Ringnut (13) angeordnet ist und zwischen sich und einer inneren und/oder äußeren profilierten Umfangswandung (9) einen sich unter dem Druck des durchströmenden Fluids verändernden Steuerspalt (10) begrenzt, wobei die Regelprofilierung (11) am Außenumfang des Regelkerns (8) und/oder an der dem Regelkern (8) gegenüberliegenden Innenumfangswandung (9) der Ringnut (13) des Durchflussmengenreglers (6) angeordnet ist, und dass zumindest eine Einsetzöffnung (4) des Trägerelements (3) mittels eines Verschlussstopfens (16) in Gebrauchsstellung verschlossen ist, welcher Verschlussstopfen (16) statt eines Reglereinsatzes in die zumindest eine Einsetzöffnung (4) eingesetzt ist.

2. Durchflussmengenregler-Einheit nach Anspruch 1, **dadurch gekennzeichnet, dass** zumindest zwei der im Trägerelement (3) vorgesehenen Durchflussmengenregler (5; 6) sich in ihren Regeleigenschaften voneinander unterscheiden,

3. Durchflussmengenregler-Einheit nach Anspruch 2, **dadurch gekennzeichnet, dass** die Drosselkörper (7) von zumindest zwei der im Trägerelement (3) vorgesehenen Durchflussmengenregler (5; 6) aus unterschiedlichen elastomeren Materialien hergestellt sind, derart, dass die Durchflussmengenregler (5; 6) sich in ihren Regeleigenschaften voneinander unterscheiden.

4. Durchflussmengenregler-Einheit nach Anspruch 2 oder 3, **dadurch gekennzeichnet, dass** die einen Steuerspalt (10) begrenzenden Umfangswandungen (9) von zumindest zwei der im Trägerelement (3) vorgesehenen Durchflussmengenregler (5; 6) voneinander verschiedene Regelprofilierungen (11) haben, derart, dass die Durchflussmengenregler (5; 6)unterschiedliche Regeleigenschaften aufweisen.

5. Durchflussmengenregler-Einheit nach einem der Ansprüche 1 bis 4, **dadurch gekennzeichnet, dass** der Reglereinsatz lösbar oder auswechselbar in die Einsetzöffnung (4) eingesetzt ist.

6. Durchflussmengenregler-Einheit nach einem der Ansprüche 1 bis 5, **dadurch gekennzeichnet, dass** jeder Regelkern (8) an seinem freien Regelkern-Endbereich zumindest einen Sicherungsvorsprung (14) hat, der den Drosselkörper (7) auf dem Regelkern (8) in axialer Richtung sichert.

7. Durchflussmengenregler-Einheit nach einem der Ansprüche 1 bis 6, **dadurch gekennzeichnet, dass** das Trägerelement (3) platten- oder scheibenförmig ausgebildet ist.

8. Durchflussmengenregler-Einheit nach einem der Ansprüche 5 bis 7, **dadurch gekennzeichnet, dass** zumindest einer der Reglereinsätze in einer ihm zugeordneten Einsetzöffnung (4) des Trägerelements (3) vorzugsweise lösbar verrastbar ist.

## Claims

1. Flow rate controller unit (1; 2; 2') having a support element (3) which extends over the clear cross-section of a fluid line section and has mutually spaced apart insert openings (4), in which a disc-shaped controller insert having a flow rate controller (5; 6) is inserted into each of at least two insert openings (4), wherein each flow rate controller (5; 6) comprises an annular flow restrictor (7) consisting of elastic material, **characterised in that** each flow restrictor (7) of the flow rate controllers (5; 6) engages around a control core (8) arranged on the controller insert, is arranged in an annular groove (13) which is provided in the controller insert centrally around the control core (8) and is open on both sides in the through-flow direction, and delimits between itself and an inner and/or outer profiled peripheral wall (9) a control gap (10) which varies under the pressure of the through-flowing fluid, wherein the control profiling (11) is arranged on the outer periphery of the control core (8) and/or on the inner peripheral wall (9) - opposite the control core (8) - of the annular groove (13) of the flow rate controller (6), and **in that** at least one insert opening (4) of the support element (3) is closed by means of a closure plug (16) in the position of use, which closure plug (16) is inserted into the at least one insert opening (4) instead of a controller insert.

2. Flow rate controller unit as claimed in claim 1, **characterised in that** at least two of the flow rate controllers (5; 6) provided in the support element (3) differ from each other in terms of their control properties.

3. Flow rate controller unit as claimed in claim 2, **characterised in that** the flow restrictors (7) of at least two of the flow rate controllers (5; 6) provided in the support element (3) are produced from different elastomeric materials such that the flow rate controllers (5; 6) differ from each other in terms of their control properties.

4. Flow rate controller unit as claimed in claim 2 or 3, **characterised in that** the peripheral walls (9), delimiting a control gap (10), of at least two of the flow rate controllers (5; 6) provided in the support element (3) have mutually different control profilings (11) such that the flow rate controllers (5; 6) have different control properties.

5. Flow rate controller unit as claimed in any one of claims 1 to 4, **characterised in that** the controller insert is inserted into the insert opening (4) so as to be able to be detached or replaced.

6. Flow rate controller unit as claimed in any one of claims 1 to 5, **characterised in that** each control core (8) has at least one securing protrusion (14) on its free control core end region, said protrusion securing the flow restrictor (7) on the control core (8) in the axial direction.

7. Flow rate controller unit as claimed in any one of claims 1 to 6, **characterised in that** the support element (3) is plate-shaped or disc-shaped.

8. Flow rate controller unit as claimed in any one of claims 5 to 7, **characterised in that** at least one of the controller inserts can preferably be detachably latched in an insert opening (4), allocated thereto, of the support element (3).

## Revendications

1. Unité régulatrice de débit (1 ; 2; 2') avec un élément de support (3) s'étendant sur la section transversale libre d'une partie de conduite de fluide, qui présente des ouvertures d'insertion (4) espacées l'une de l'autre, dans lesquelles un insert de régulateur réalisé en forme de disque avec un régulateur de débit (5 ; 6) est respectivement inséré dans au moins deux ouvertures d'insertion (4), dans laquelle chaque régulateur de débit (5 ; 6) présente un corps d'étranglement annulaire (7) en matériau élastique, **caractérisée en ce que** le corps d'étranglement (7) des régulateurs de débit (5 ; 6) entoure respectivement un coeur de régulation (8) disposé sur l'insert de régulateur, est disposé dans une rainure annulaire (13) ouverte de part et d'autre dans la direction d'écoulement, prévue dans l'insert de régulateur de façon centrale autour du coeur de régulation (8), et délimite entre lui-même et une paroi périphérique profilée intérieure et/ou extérieure (9) une fente de commande (10) variable sous la pression du fluide en écoulement, dans laquelle le profilage de régulation (11) est disposé sur la périphérie extérieure du coeur de régulation (8) et/ou sur la paroi périphérique intérieure (9), opposée au coeur de régulation (8) de la rainure annulaire (13) du régulateur de débit (6), et **en ce qu'**au moins une ouverture d'insertion (4) de l'élément de support (3) est fermée en position d'utilisation au moyen d'un bouchon de fermeture (16), qui est inséré au lieu d'un insert de régulateur dans ladite au moins une ouverture d'insertion (4).

2. Unité régulatrice de débit selon la revendication 1, **caractérisée en ce qu'**au moins deux des régulateurs de débit (5 ; 6) prévus dans l'élément de support (3) se distinguent l'un de l'autre par leurs propriétés de régulation.

3. Unité régulatrice de débit selon la revendication 2, **caractérisée en ce que** les corps d'étranglement (7) d'au moins deux des régulateurs de débit (5 ; 6) prévus dans l'élément de support (3) sont fabriqués en des matériaux élastomères différents, de telle manière que les régulateurs de débit (5 ; 6) se distinguent l'un de l'autre par leurs propriétés de régulation.

4. Unité régulatrice de débit selon la revendication 2 ou 3, **caractérisée en ce que** les parois périphériques (9) délimitant une fente de commande (10) d'au moins deux des régulateurs de débit (5 ; 6) prévus dans l'élément de support (3) présentent des profilages de régulation (11) différents l'un de l'autre, de telle manière que les régulateurs de débit (5 ; 6) présentent des propriétés de régulation différentes.

5. Unité régulatrice de débit selon l'une quelconque des revendications 1 à 4, **caractérisée en ce que** l'insert de régulateur est inséré de façon amovible ou échangeable dans l'ouverture d'insertion (4).

6. Unité régulatrice de débit selon l'une quelconque des revendications 1 à 5, **caractérisée en ce que** chaque coeur de régulation (8) comporte sur sa région d'extrémité libre de coeur de régulation au moins une saillie de blocage (14), qui bloque le corps d'étranglement (7) sur le coeur de régulation (8) en direction axiale.

7. Unité régulatrice de débit selon l'une quelconque des revendications 1 à 6, **caractérisée en ce que** l'élément de support (3) est réalisé en forme de plaque ou en forme de disque.

8. Unité régulatrice de débit selon l'une quelconque des revendications 5 à 7, **caractérisée en ce qu'**au moins un des inserts de régulateur peut être encliqueté, de préférence de façon amovible, dans une ouverture d'insertion (4) de l'élément de support (3) qui lui est associée.
